# FASCICULE DE BREVET EUROPEEN

(11) **EP 3 615 710 B1**
(45) Date de publication et mention de la délivrance du brevet: **25.08.2021**
(21) Numéro de dépôt: 18727678.7
(22) Date de dépôt: 25.04.2018
(51) Int. Cl.: C25B 15/00, C25B 15/08, C25B 1/04, C01B 3/52, F02B 43/10, F23D 14/28, F23D 14/46, F23D 14/38, F23D 14/52, C01B 3/56, F02M 25/12, F23K 5/00

(54) **SYSTÈME DE TRAITEMENT DE GAZ D'HYDROGÈNE ET/OU D'OXYGÈNE PRODUIT PAR ÉLECTROLYSE DE L'EAU SERVANT À ALIMENTER UNE COMBUSTION**
SYSTEM ZUR BEHANDLUNG VON DURCH WASSERELEKTROLYSE ERZEUGTEM WASSERSTOFF ODER SAUERSTOFF ZUR VERSORGUNG EINES VERBRENNUNGSPROZESSES
SYSTEM FOR TREATING HYDROGEN AND/OR OXYGEN GAS PRODUCED BY WATER ELECTROLYSIS SERVING TO SUPPLY A COMBUSTION PROCESS

(30) Priorité: 25.04.2017 FR 1753592
(43) Date de publication de la demande: 04.03.2020
(73) Titulaire: Bulane, 34690 Fabregues (FR)
(72) Inventeur: JEREZ, Nicolas, 34970 Lattes (FR); CHAMPSEIX, Henri, 34980 Montferriez sur Lez (FR)
(74) Mandataire: Regimbeau
(86) Numéro de dépôt international: PCT/EP2018/060608
(87) Numéro de publication internationale: WO 2018/197568

(56) Documents cités:
- WO-A1-2013/093929
- FR-A1- 2 942 973
- US-A- 5 082 544
- US-A1- 2012 244 485

## Description

### DOMAINE TECHNIQUE

La présente invention concerne le traitement de gaz d'hydrogène et/ou d'oxygène produit par électrolyse de l'eau.

La filtration et le traitement des gaz permettent de maitriser les paramètres physico-chimiques tels que la composition, le débit et la température de manière stable dans le temps pour toutes applications utilisant une source de chaleur issue de la combustion de gaz combustibles obtenue à partir de l'électrolyse de l'eau.

Les applications sont diverses. Elles peuvent concerner les opérations de combustion, de dépollution de chambre de combustion, de soudage, de brasage, de chauffage ou encore de découpage.

L'invention propose quant à elle un système de traitement de gaz d'hydrogène et/ou d'oxygène, ainsi qu'un dispositif de production d'hydrogène et/ou d'oxygène par électrolyse de l'eau servant à alimenter une combustion.

Elle trouve avantageusement application pour l'alimentation d'un bruleur de gaz, d'une chambre de combustion ou, d'un chalumeau (notamment de type à hydrogène) et plus généralement pour toute autre application utilisant des gaz combustibles issues de l'électrolyse de l'eau.

### ART ANTERIEUR ET PROBLEMATIQUE GENERALE

Le procédé d'électrolyse permet par exemple la production d'oxygène et d'hydrogène gazeux de manière séparé et/ou mélangé. Ces gaz combustibles peuvent être exploités pour générer de la chaleur dans une application de combustion comme pour les opérations de combustion, de dépollution de chambre de combustion, de soudage, de brasage, de chauffage ou encore de découpage, etc...

Cependant, les gaz ainsi produits par électrolyse sont chargés d'humidité. Afin de contrôler la qualité de la combustion, le taux d'humidité des gaz doit être réduit, contrôlé et ajusté afin de satisfaire pleinement les besoins de l'application.

D'autre part, les électrolytes utilisés pour l'électrolyse de l'eau sont des solutions aqueuses aux pH basiques ou acides. La part humide du gaz peut ainsi contenir également des résidus acides ou basiques. Une étape de traitement est donc nécessaire.

Une fois la phase liquide séparée de la phase gazeuse, le condensat obtenu doit être évacué sans contraindre le processus de traitement en cours.

Dans le cas où les gaz sont neutralisés et/ou lavés par la mise en contact avec un liquide, un gaz ou un composé solide réactif de lavage, celui-ci doit être évacué et/ou régénéré pour continuer d'assurer un traitement efficace.

D'autre part, des composants tels que des coalesceurs, des médias filtrants et/ou neutralisants nécessitent d'être remplacés afin de garantir un fonctionnement optimal du système. Ce remplacement doit être simplifié, peu couteux en temps d'opération, sans nécessiter un démontage complet du système.

Une autre étape de traitement doit aussi permettre de retenir les éléments solides millimétriques et/ou micrométriques emportés par le flux de gaz.

De plus, certaines applications utilisant la combustion des gaz hydrogène et/ou de l'oxygène produit par électrolyse de l'eau de manière séparés ou mélangés nécessitent une modification de leur composition physico-chimique. Le gaz est ainsi fonctionnalisé par un composé chimique tiers par la mise en contact avec un réactif.

Cette modification de composition physico-chimique doit être maintenue et contrôlée de manière précise dans le temps.

Enfin, il est important que les différentes enceintes et/ou récipients du dispositif de traitement soient compartimentés d'un point de vue fluidique afin d'éviter les contaminations et que les différents médias ne se mélangent pas.

Ainsi, il existe un besoin général pour un système de traitement de gaz issus de l'électrolyse de l'eau servant à alimenter une combustion intégrant en tout ou partie les fonctions suivantes :
- Filtration : séparer le phase liquide du gaz, éliminer l'humidité, éliminer des éventuels résidus solides,
- Lavage/Neutralisation des gaz : supprimer les résidus acides ou basiques de l'électrolyte,
- Evacuer, réutiliser les condensats formés,
- Evacuer, purger, contrôler les différents liquides, solides ou gaz de lavage et/ou de traitement,
- Permettre que ces étapes d'évacuation, de réinjection et de contrôle ne perturbent pas le fonctionnement du dispositif,
- Fonctionnaliser le gaz par une modification physico-chimique grâce à un composé chimique tiers, afin de maitriser les paramètres de combustion ou de lui donner des propriétés supplémentaires,
- Contrôler et stabiliser cette fonctionnalisation dans le temps
- Assurer une compartimentation fluidique des différentes enceintes de lavage, de traitement, et de contrôle afin d'éviter tout mélange, contamination des différents composés chimiques liquides, solides ou gazeux utilisés dans le système

On connaît aujourd'hui classiquement des générateurs permettant la production d'oxygène et d'hydrogène - sous forme individuelle ou mélangée - par électrolyse de l'eau. Ces dispositifs peuvent être associés à un bruleur de gaz, une chambre de combustion, un chalumeau ou tout autre application utilisant des gaz combustibles issues de l'électrolyse de l'eau.

Un tel système comprend notamment :
- une cellule d'électrolyse composé d'un récipient contenant des électrodes et un électrolyte ;
- une source d'énergie électrique pour alimenter la cellule d'électrolyse et ses auxiliaires comme les capteurs, les systèmes de refroidissement, par exemple ;
- un système de traitement des gaz générés par la cellule d'électrolyse.

Comme on l'aura compris, les systèmes de traitement des gaz sont indispensables sur ces générateurs servant à alimenter une combustion afin de permettre de purifier les gaz générés et/ou de les traiter pour en modifier la composition physico-chimique dans le but de contrôler les paramètres de combustion et/ou de donner des propriétés supplémentaires aux gaz produits.

On connait également les documents WO2013093929A1, US5082544A1, FR2942973A1 et US20120244485A1.

### RESUME DE L'INVENTION

Un but général de l'invention est de proposer un système de traitement des gaz issus d'un procédé d'électrolyse qui présente une composition physico-chimique adéquate pour l'exploitation de gaz, séparés et/ou mélangés, dans une application de combustion exploitable en sortie du dispositif.

Notamment, un but de l'invention est de proposer un système qui permette, en sortie, une combustion stable et de grande qualité.

Un autre but de l'invention est de proposer un système de traitement des gaz qui soit fiable, économique et à maintenance réduite.

Un autre but encore de l'invention est de proposer une solution qui soit structurellement simple et autorise une grande compacité.

Ainsi, selon un aspect, l'invention propose un système de traitement de gaz d'hydrogène et/ou d'oxygène comprenant au moins un échangeur thermique, dans lequel circule le (ou les) gaz pour être refroidi(s) ou réchauffé(s), ledit échangeur thermique étant immergé dans un composé réactif qui est reçu dans une enceinte et qui est lui-même traversé par le (ou les) gaz, ledit composé réactif générant une réaction endothermique ou exothermique lors d'une mise en contact avec le gaz, ledit composé réactif ainsi que le (ou les) gaz subissant une modification physico-chimique qui génère une réaction endothermique ou exothermique lorsqu'ils sont mis en contact.

Avec un tel système, le traitement du gaz par le composé réactif est utilisé pour générer un refroidissement ou un réchauffement des gaz pendant leur traitement, ce à des fins d'optimisation.

Un tel système intègre avantageusement les différentes caractéristiques suivantes prises seules ou en combinaison :
- un composé réactif est un composé liquide dans lequel le gaz circule par barbotage ;
- il peut également être de type solide ;
- un tel composé est en outre organique ou inorganique ;
- le système comporte par exemple différentes enceintes de traitement et/ou de filtration, chacune de ces enceintes comportant un composé réactif ou un composé de lavage à travers lequel le (ou les) gaz circule(nt) ;
- le système comporte au moins un coalesceur en entrée d'une colonne de séparation et/ou de traitement pour l'asséchement des gaz et la formation/récupération de condensats et sous-produits ; un tel coalesceur permet d'enclencher mécaniquement ou chimiquement le transfert en phase liquide des espèces présentes dans les gaz sous forme de vapeur ;
- la colonne de séparation peut notamment comporter un média filtrant et/ou neutralisant (filtre à particules en un matériau organique ou inorganique par exemple) ;
- le coalesceur et/ou le média filtrant et/ou neutralisant sont disposés dans des logements accessibles sans démontage de tuyaux de circulation de gaz ni de raccord ni d'enceinte situé sur le trajet du (ou des) gaz, afin de permettre la maintenance desdits coalesceur et/ou média sans ouverture du circuit ;
- le système comporte un ou plusieurs pont(s) thermique(s) permettant de transmettre la température entre les récipients et ainsi refroidir la colonne de séparation, ou des enceintes de traitement et/ou de filtration à partir du récipient le plus froid et ainsi, par exemple d'augmenter sa capacité de séparation par condensation d'une colonne de séparation gaz liquide ;
- le système comporte au moins un système de vidange et/ou de recyclage des condensats et autres sous-produits générés dans la colonne de séparation, et/ou du composé réactif et/ou de lavage ;
- le système comporte des clapets anti-retour, des électrovannes, des clapets anti-retours de flamme, des vannes permettant d'assurer une bonne gestion des différents compartiments fluidiques, d'assurer la sécurité du système et des personnes afin d'éviter toutes contaminations inter-enceintes et/ou récipients ;
- le système comprend au moins un système de répartition du débit des gaz permettant le contrôle du taux de filtration, de modification physico-chimique et/ou le pilotage de la température des gaz ;
- le système comprend au moins un capteur de niveau, positionné sur au moins une enceinte et/ou une colonne permettant l'asservissement, la réalimentation, et/ou à l'évacuation du composé réactif, ainsi qu'au recyclage des condensats/sous-produit ;
- il peut également comporter au moins un capteur de mesure thermique et/ou au moins un capteur de débit de gaz permettant la surveillance et le contrôle du système de répartition de débit.

L'invention concerne en outre un dispositif de production d'hydrogène et/ou d'oxygène par électrolyse de l'eau, caractérisé en ce qu'il comporte un tel système de traitement des gaz.

Elle propose également un appareil servant à alimenter une combustion comprenant de l'hydrogène et/ou de l'oxygène, caractérisé en ce qu'il comporte un tel dispositif de production d'hydrogène et/ou d'oxygène par électrolyse de l'eau.

Un tel appareil est par exemple un appareil de brasage/soudage dans lequel la combustion est assurée par un chalumeau et sa buse formant un brûleur.

### BREVE DESCRIPTION DES DESSINS

D'autres avantages et caractéristiques de l'invention ressortiront encore de la description qui va suivre de plusieurs variantes d'exécution, données à titre d'exemples non limitatifs, à partir des dessins annexés. L'invention est ainsi décrite en relation avec des formes de réalisations préférées, mais il va de soi que d'autres formes de réalisations sont envisageables. En particulier, les caractéristiques des différentes formes de réalisations et composants décrites peuvent être combinées entre elles, s'il n'y a pas d'incompatibilités.
Les figures 1 et 2 illustrent des exemples de systèmes de traitement de gaz conformes à des modes de réalisation possibles pour l'invention.
La figure 3 est une représentation schématique d'une synthèse de ces deux modes de réalisation.

### DESCRIPTION DETAILLEE DE PLUSIEURS MODES DE REALISATION DE L'INVENTION

### Premier exemple de système de traitement : Traitement par liquide réactif avec répartiteur de débit et pilotage par contrôle des paramètres de combustion

### Structure générale

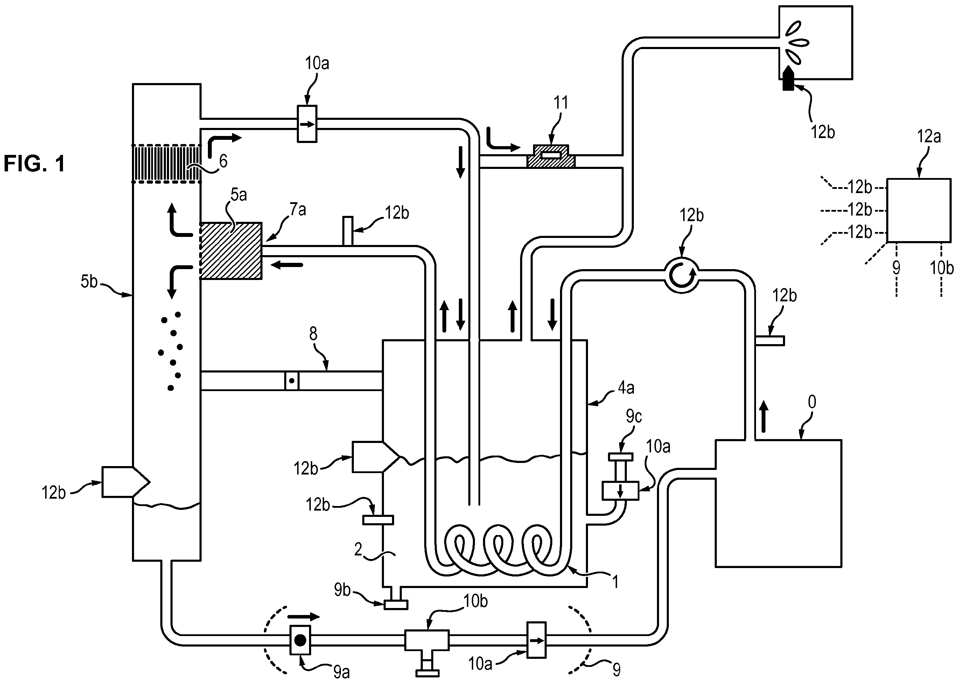

Dans l'exemple illustré sur la figure 1, le système de traitement de gaz reçoit en entrée les gaz générés par une cellule d'électrolyse 0 et alimente une chambre de combustion.

Ce mode de réalisation du système, illustré sur la figure 1, comporte en particulier les éléments suivants :
- une enceinte de traitement des gaz 4a contenant un liquide réactif 2 ;
- un échangeur thermique 1, qui est par exemple constitué par un serpentin, plongé dans le liquide réactif au sein de l'enceinte ;
- une colonne de séparation gaz/liquide 5b ;
- un répartiteur de débit de gaz 11.

L'enceinte 4a contient un composé qui est un liquide organique, une solution aqueuse saline ou un composé solide réactif avec lequel le gaz génère une réaction endothermique ou exothermique lors de sa mise en contact ou de son barbotage.

Les liquides réactifs pourront par exemple être choisi dans la liste non-exhaustive suivante : acétone, éthanol, MEK, toluène, méthanol, acide méthanoïque, acide acétique, acide citrique, acide nitrique, acide oxalique, acide sulfurique, glycols, solution d'hydroxyde de potassium, solution d'hydroxyde de sodium, les liquides organiques bio-sourcés.

Les solides réactifs pourront par exemple être choisis dans la liste suivante, sans qu'elle soit exhaustive : silica gel, nitrate de potassium, nitrate de calcium, hydroxyde de potassium ou de sodium, matériaux céramiques prétraités et/ou fonctionnalisés, tel que de la zéolithe ou des alumines.

Dans le cas du mode réalisation de l'exemple 1, le liquide réactif 2 est de l'acétone.

Le système peut également comprendre une ou plusieurs autres enceintes (non représentées) de traitement des gaz contenant des liquides ou des solides réactifs ou encore une solution de lavage. Lesdites enceintes sont alors traversées ou non par un échangeur thermique.

De la même façon, il est possible de prévoir une ou plusieurs autres colonnes de séparation gaz/liquide.

### Schéma de circulation fluidique

Dans le cas de l'électrolyse de l'eau, les gaz générés sont de l'hydrogène et de l'oxygène, obtenus simultanément dans la cellule d'électrolyse 0. La température et le débit du flux de gaz sont mesurée en sortie de cellule par un capteur de température et un débitmètre notés 12b.

Les gaz sont mis en contact thermique à travers la paroi de l'échangeur 1, lui-même refroidi par le liquide réactif 2 dans lequel il est immergé. La température des gaz, ainsi diminuée, est mesurée à nouveau par un capteur de température 12b à la sortie du récipient 4a.

Le flux gazeux est alors injecté dans la colonne de séparation gaz/ liquide 5b à travers un coalesceur 5a.

Un tel coalesceur est par exemple un tamis, un fritté ou une mousse, et plus généralement toute structure qui force, mécaniquement ou chimiquement, un transfert à l'état liquide des espèces présentes dans le flux gazeux sous forme de vapeur, et permet ensuite la séparation gaz/liquide.

Il est disposé, sur le trajet du gaz dans les tuyaux, dans un logement dédié 7a. Ce logement s'ouvre facilement par rapport au tuyau, ce qui permet d'avoir accès aisément et directement au coalesceur sans démontage complet du système et notamment des tuyaux.

Les condensats ainsi formés dans la colonne 5b sont séparés de manière gravitaire et stockés dans la partie inférieure de la colonne.

En fonction du niveau de condensat déterminé par le capteur 12b placé en partie basse de la colonne, un système de recyclage/vidange des condensat 9 composé d'une pompe 9a, d'une électrovanne 10b, piloté par la carte électronique 12a, réinjecte les condensats liquides ainsi formés dans la cellule d'électrolyse 0 ou les évacue vers l'extérieur du système.

Dans la partie supérieure de la colonne de séparation gaz/liquide 5b, le flux gazeux passe par exemple à travers un média filtrant 6.

Ce média filtrant est par exemple de type membranaire. Il filtre à l'échelle millimétrique, micrométrique ou nanométrique. Il peut être plus généralement tout matériau permettant de piéger les éléments solides emportés par le flux gazeux.

Egalement, le média filtrant peut-être prétraité et fonctionnalisé pour améliorer son efficacité. Ce filtre 6 retient les éventuelles particules solides emportés par le flux de gaz et permet sa neutralisation chimique, par exemple, en termes de pH.

Après avoir traversé un clapet anti-retour 10a, les gaz se séparent en deux flux distincts : l'un est envoyé dans le liquide de l'enceinte 4a, et l'autre vers la sortie, au moyen d'un système de répartition de débit 11.

Ce système 11 permet de doser les deux flux en utilisant la perte de charge qu'il induit par sa conception pouvant, par exemple, mettre en œuvre une restriction fluidique ou encore un instrument piloté manuellement ou automatiquement par la carte électronique 12a.

Par exemple, le dosage peut se faire au moyen d'une vis pointeau mécanisée et/ou d'un jeu d'électrovannes permettant le pilotage électronique/automatique de l'ouverture mécanique/fluidique du système de répartition des gaz. On ajuste ainsi en temps réel le débit de gaz dirigé vers l'enceinte 4a.

De tels systèmes de répartition de débit peuvent également être prévus pour le contrôle de l'entrée du gaz dans la ou les autres enceintes lorsque le système en comporte plusieurs.

Une partie du flux de gaz est ainsi dirigé vers l'enceinte 4a et passe alors dans le liquide réactif 2. Ceci provoque une modification physico-chimique du flux gazeux, et permet le refroidissement du liquide réactif, et ainsi de l'enceinte 4a et de l'échangeur 1.

En sortant de l'enceinte 4a, les gaz modifiés sont ensuite mélangé avec le flux non-modifié venant du système de répartition de débit 11. L'ajustement des deux flux grâce au système 11 permet ainsi d'obtenir une composition particulière, prédéfinie, avant la combustion.

La combustion réalisée à la fin du circuit fluidique, est, par exemple contrôlée par un analyseur de combustion 12b permettant sont ajustement et son contrôle par la carte électronique 12a.

En variante encore, la réaction du liquide réactif 2 traversé par le flux gazeux peut être exothermique et permettre le réchauffement de celui-ci.

Ce mode de mise en œuvre trouve notamment avantageusement application dans les cas, où les gaz produits par électrolyse, doivent être maintenus à une température minimale. Le réchauffement ainsi réalisé permet, par exemple, d'éviter la formation de gel dans le dispositif de traitement de gaz,

La température du gaz est ainsi gérée afin d'assurer des propriétés physico-chimiques compatibles avec son exploitation.

Dans ce qui suit on s'intéresse aux paramètres sur lesquels le système de traitement qui vient d'être décrit influe.

### Taux d'humidité : Séparation gaz/liquide optimisée

Dans l'exemple illustré sur la figure 1, le taux d'humidité du gaz en sortie de la cellule d'électrolyse 0 est fortement réduit grâce à la combinaison de l'enceinte 4a, de l'échangeur 1, de la colonne de séparation 5b, du coalesceur 5a et du liquide réactif 2 qui est de l'acétone.

Les propriétés endothermiques du liquide réactif sont ici exploitées pour refroidir le flux gazeux et permettre une coalescence particulièrement efficace dans le composant coalesceur 5a grâce à la diminution du point de rosé du gaz. L'efficacité ainsi augmentée au niveau du coalesceur 5a permet une séparation maximale de la phase liquide contenue dans le gaz et la récupération de condensat dans la partie inférieure de la colonne de séparation 5b.

Un pont thermique 8 permet de faire bénéficier la colonne 5b du refroidissement généré par la réaction endothermique dans l'enceinte 4a. Ce pont thermique 8 est réalisé dans l'exemple par une liaison mécanique (par exemple un bloc métallique soudé ou assemblé par des vis entre les deux récipients). L'échange thermique entre les deux récipients provoque un refroidissement de la colonne de séparation gaz/liquide, améliorant ainsi encore sa capacité de filtration et/ou séparation par condensation.

D'autre part, ce système de séparation gaz/liquide utilisant une modification de la température du gaz a également l'avantage d'autoréguler l'augmentation de son efficacité de filtration en fonction du débit de gaz.

### Résidus acides et basiques : Neutralisation par un média filtrant fonctionnalisé

Dans une cellule d'électrolyse de type électrolyseur alcalin, le gaz est produit à pH élevé. Il est donc particulièrement important de rendre neutre le gaz afin d'assurer des paramètres de combustion maitrisé, et de protéger, par exemple, une éventuelle corrosion des différents composants et récipients du système.

En sortie du coalesceur 5a, le gaz est débarrassé d'une grande partie de l'humidité provenant de la cellule d'électrolyse 0 grâce à la combinaison de composants qui assurent la séparation gaz/liquide et optimise la coalescence.

Cependant, une humidité résiduelle ayant un pH élevé peut subsister. En utilisant un média filtrant 6, possiblement fonctionnalisé, il est possible d'agir sur le pH du gaz.

### Gestion des condensats : Contrôle et recyclage des condensats

Les condensats liquides doivent être contrôlés et évacués sans contraindre le processus de filtration en cours dans la colonne.

C'est ce que permet l'ensemble 9, constitué par le capteur de niveau liquide 12b, de la pompe à condensat 9a, de l'électrovanne 10b, du clapet anti-retour 10a et de la carte électronique 12a.

Les condensats liquides ainsi formés constituent une solution aqueuse basique ou acide, qui, lorsque le niveau est détecté par le capteur 12b au sein de la colonne 5b, déclenche la réadmission par pompage vers la cellule d'électrolyse 0.

D'autre part, il peut être choisi de ne pas recycler les condensats vers la cellule d'électrolyse 0 mais de les évacuer vers l'extérieur du système, par exemple si le niveau liquide de l'électrolyseur est déjà à son maximum. Dans ce cas, l'électrovanne 10b transfère le liquide vers le bouchon de purge où un réservoir préalablement mis en place recueille ainsi le condensat à l'extérieur du dispositif.

Le recyclage des condensats vers la cellule d'électrolyse 0 ou leur évacuation, au moyen des composants et instruments qu'il met en œuvre, ne perturbe pas le processus de filtration en cours.

### Gestion des réactifs : Contrôle, vidange, renouvellement des réactifs et des éléments filtrants et coalesceurs

A l'usage, les réactifs utilisés pour modifier la composition physico-chimique et les éléments filtrants et coalesceurs doivent être remplacés pour assurer une efficacité optimale du processus.

Le bouchon 9b permet le renouvellent manuel des réactifs, par exemple l'acétone dans l'enceinte 4a. Dans un autre mode de réalisation, cette adjonction de liquide peut être réalisée de manière automatique avec une pompe, actionné par la carte électronique 12a et un capteur de niveau 12b placé dans l'enceinte 4a. Pour un renouvellement complet du liquide réactif, le bouchon de purge 9b permet la vidange manuelle complète de l'enceinte 4a.

Pour permettre un remplacement aisé du coalesceur 5a, il peut être prévu que le coalesceur soit situé dans un logement étanche 7a permettant son extraction et son remplacement sans avoir à démonter l'ensemble des tubes qui assurent la circulation des fluides.

De la même manière, le média filtrant 6, placé dans la colonne 5b, peut être fixé à un bouchon 7b qui, lorsque le système est arrêté, permet de le remplacer simplement et rapidement et ne nécessite pas un démontage complet du système.

### Filtration des éléments solides : média filtrant membranaire

Avec un débit important, le flux gazeux peut emporter des résidus solides tel que des particules métalliques qui doivent être filtrés afin de pas endommager les autres éléments du dispositif.

Le média filtrant 6, en plus de sa fonction de neutralisation décrite précédemment dans l'exemple, retient ces éléments solides et débarrasse ainsi le gaz de toutes impuretés supérieures au diamètre de ces pores. Dans le cas de la figure 1, le média filtrant est un filtre papier avec une ouverture de pore de l'ordre de l'ordre de 1 µm.

### Modification physico-chimique des gaz

Afin d'atteindre des propriétés de combustion particulières tel qu'une température de combustion, une odeur, une couleur de flamme, un niveau de rayonnement optique, un taux de produits de combustion, les gaz sont fonctionnalisés grâce à la combinaison de tout ou partie des différentes fonctions/étapes de traitement du flux gazeux assurées par les parties du dispositif.

Dans le cas de la figure 1, cette modification est opérée par un passage du flux gazeux dans le liquide réactif 2 de l'enceinte 4a. En plus de la génération de froid, utile à l'optimisation du procédé de séparation gaz liquide via la coalescence, le gaz modifié physico-chimiquement par le liquide réactif est emporté vers la combustion et permet de lui donner des propriétés particulières.

Cette modification physico-chimique avec de l'acétone permet également de donner une odeur au gaz, permettant de détecter une éventuelle fuite ou un défaut de la combustion.

### Gestion physico-chimique des gaz : Instrumentation, régulation

Ces propriétés physico-chimiques sont contrôlées par exemple, via l'analyseur de combustion 12b placé à proximité de la combustion. Des taux et/ou valeurs cibles prédéfinies sont atteints en régulant, manuellement ou automatiquement grâce à une carte électronique 12a, la perte de charge induite par le système de répartition de débit 11 par rétrécissement ou augmentation du diamètre fluidique, qui dévie une partie du flux gazeux originel vers le récipient de traitement.

Par exemple, notamment dans le cas d'une répartition du débit au moyen d'une vis pointeau mécanisée pilotée électroniquement, la régulation peut être fonction de la température du récipient 4a et être obtenue grâce à une sonde de température.

Ce système permet un contrôle précis de la combustion en sortie de l'invention en termes de débit, de température et de composition chimique, et ceci, de manière durable dans le temps et de manière répétable.

### Compartimentation fluidique : Organes de sécurité et d'anticontamination

Des composants, tel que des clapets anti-retour 10a par exemple, permettent d'assurer la sécurité du dispositif et des personnes et une bonne compartimentation fluidique entre les différents récipients. Ceux-ci permettent d'éviter le déplacement non souhaité des liquides et/ou des gaz entre les enceintes, de garantir leur intégrité physico-chimique (contamination) ainsi que leurs performances fonctionnelles, leurs renouvellements, leur recyclage et/ou leur vidange.

### Deuxième exemple de mode de réalisation du système de traitement : Traitement par solide réactif, lavage liquide sans répartiteur de débit et pilotage par contrôle des paramètres de composition physico-chimique du flux gazeux

### Structure et circulation fluidique

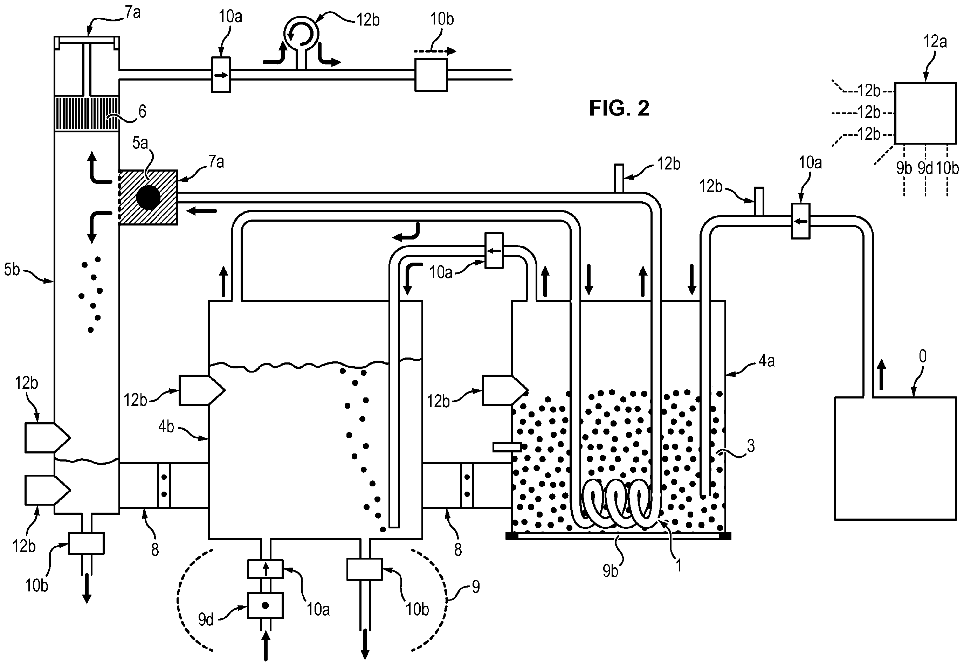

Ce mode de réalisation du système, comparativement au premier exemple de mode de réalisation et illustré sur la figure 2, comporte en particulier les éléments suivants :
- une enceinte 4a remplie en l'occurrence d'un solide réactif 3,
- une enceinte de lavage 4b,
- un échangeur 1, qui est par exemple constitué par un serpentin, qui plonge dans le solide réactif 3.

La température du gaz est mesurée en sortie de la cellule d'électrolyse 0 par un capteur de température 12b avant d'être envoyé dans l'enceinte 4a. au contact du solide réactif 3. Au contact du gaz humide, le solide réactif 3 provoque une réaction endothermique qui refroidit l'échangeur thermique 1, les gaz qui le traverse, et l'ensemble de l'enceinte 4a.

Le solide réactif 3 se présente sous une forme divisée telle qu'une poudre afin de maximiser la surface de contact gaz/solide ou encore sous forme de granulés, d'objets millimétrique ou sous forme massive.

Dans l'exemple de la figure 2, il est constitué par du nitrate de potassium en granulés.

Le flux de gaz est alors envoyé dans l'enceinte 4b et barbote dans le liquide de lavage, en l'occurrence, dans ce cas de l'eau pure. Dans cette enceinte, le gaz est nettoyé des résidus de nitrate de potassium. La liaison mécanique 8 forme un pont thermique entre les enceintes 4a et 4b.

Le liquide de lavage est renouvelé de manière automatique grâce un système 9 composé d'une pompe 9d protégé par un clapet anti-retour 10a et une vanne d'évacuation 10b.

Après le lavage, la température du flux de gaz diminue ensuite par échange thermique dans l'échangeur 1 contenue dans l'enceinte 4a.

Il est alors injecté dans la colonne de séparation gaz/liquide 5b à travers un coalesceur 5a. Celui-ci peut être une toile métallique avec une dimension de maille de 150 µm, et permet une séparation par coalescence de la phase liquide et de la phase gazeuse. Les condensats ainsi formés sont séparés de manière gravitaire dans la partie inférieure de la colonne 5b. Le niveau des condensats est mesuré grâces aux capteurs de niveaux 12b.

Dans la partie supérieure de la colonne de séparation gaz/liquide 5b, le flux gazeux passe à travers un média filtrant 6 qui est par exemple une toile métallique contenant des grains de zéolithes. Ce composé d'adsorption permet d'adsorber l'humidité restante dans le gaz. Un système de bouchon-filtre 7b permet le remplacement aisé de cette cartouche filtrante à intervalle régulier afin de renouveler le filtre 6. Ce filtre retient également les éventuelles particules solides emportées par le flux de gaz.

En sortie de colonne 5b, l'analyseur de gaz 12b mesure le taux d'humidité relative, le taux d'hydroxyde de potassium et le taux de nitrate de potassium résiduels.

En sortie, le gaz est apte à être exploité dans une combustion nécessitant un taux d'humidité relative et de pureté prédéfinis et maîtrisés.

### Le taux d'humidité : Séparation gaz/liquide optimisée

De la même manière que dans le mode de réalisation 1, le refroidissement du gaz permet d'optimiser la séparation gaz/liquide en abaissant le point de rosée du gaz circulant dans le serpentin et en facilitant sa coalescence et sa condensation dans le coalesceur 5a et dans la colonne de séparation gaz/liquide 5b. Cependant, dans ce cas, le solide réactif est le nitrate de potassium sous forme de granulés qui est choisi pour ses propriétés de refroidissement au contact du gaz humide.

En variante, et pour d'autres types d'applications, le solide réactif peut être choisi pour ses propriétés exothermiques : par exemple, hydroxyde de potassium ou de sodium sous forme de granulés, matériaux céramiques prétraités et/ou fonctionnalisés, etc.

### Les résidus acides et basiques : Nettoyage par un liquide de lavage

Le bullage dans un liquide lavant tel que l'eau permet de diluer ces résidus dans le liquide et de nettoyer le gaz. Le gaz se retrouve ainsi chargé d'humidité, mais purifié des résidus basiques ou acides qui pourrait modifier son pH.

Un renouvellement régulier de l'eau de lavage est assuré pour que la concentration de l'eau en résidus reste faible et permette un nettoyage efficace par dilution.

Enfin, lorsqu'ils traversent le filtre 6, les derniers résidus d'humidité pouvant éventuellement être encore chargé en résidus ionique, sont adsorbés dans les pores de la zéolithe.

### Gestion des réactifs : Contrôle, vidange, renouvellement des réactifs et des éléments filtrants et coalesceurs.

La gestion des réactifs s'effectue de manière analogue au mode de réalisation 1 à la différence que le réactif est ici de type solide.

Un ajout de solide réactif peut être réalisé manuellement par dévissage de la platine 9b, permettant l'évacuation du solide réactif usagé et l'ajout d'un nouveau lot de granulés neuf jusqu'au niveau contrôlé par le capteur 12b. Dans un autre mode de réalisation, spécifiquement dans l'usage d'un réactif de type solide, cette adjonction de granulés peut être réalisé de manière automatique par un système d'adjonction à pales ou de trémie, actionné par une carte électronique 12a, isolé par un anti-retour de gaz.

Le liquide de lavage est quant à lui régulièrement renouvelé par le système 9 constitué d'une pompe 9d, protégé par un clapet anti-retour 10a. Le liquide usagé est évacué par une vanne piloté 10b.

### Modification physico-chimique des gaz

Comme dans du mode de réalisation 1, le gaz est d'abord modifié par une mise en contact avec un réactif, ici le nitrate de potassium. Cependant, dans ce mode de réalisation spécifique, on ne souhaite pas que le gaz soit enrichi en nitrate de potassium en sortie de dispositif. Ainsi, une seconde phase de modification est effectuée, elle consiste en une étape de purification, par un liquide de lavage, afin de nettoyer les gaz de tout résidus de nitrate de potassium.

### Gestion physico-chimique des gaz : Instrumentation, régulation

Dans ce cas de mode de réalisation, le gaz est contrôlé par un analyseur 12b en sortie de colonne 5b qui vérifie que les taux d'humidité, de nitrate de potassium et le pH sont inférieurs à des taux prédéfinis.

Les valeurs mesurées permettent notamment de contrôler l'efficacité des différents traitements et d'actionner le renouvellement du solide réactif ou du liquide de lavage si nécessaire afin d'assurer une composition de gaz exploitable de manière répétable et contrôlée.

### Synthèse des deux modes de réalisation décrits ci-dessus

Le tableau ci-dessous reprend en synthèse les composants implémentés dans les deux modes de réalisation du système de traitement présentés en référence aux figures 1 et 2 :

| **Repère** | **Elément/Composant** | **Mode de Réalisation 1** | **Mode de Réalisation 2** |
|---|---|---|---|
| 1 | Echangeur Thermique | OUI | OUI |
| 2 | Réactif Liquide | OUI | **NON** |
| 3 | Réactif Solide | NON | **OUI** |
| - | Organique/Inorganique | ORGANIQUE | **INORGANIQUE** |
| 4 | Enceintes de Traitement/Filtration/Lavage | OUI : 4A | **OUI : 4A** & **4B** |
| 5A, 5B | Coalesceur, Colonne | OUI | OUI |
| 6 | Média Filtrant/Neutralisant | OUI | OUI |
| 7A, 7B | Logements Coalesceur/Média Filtrant-Neutralisant | OUI | OUI |
| 8 | Pont Thermique | OUI | OUI |
| 9 à 9x | Vidange/Recyclage Condensats et/ou Réactifs | OUI | OUI |
| 10 à 10x | Composants de compartimentage : Clapet Anti-Retour, Electrovanne, Anti-Retour de Flamme | OUI | OUI |
| 11 | Répartiteur de Débit Gaz | OUI | **NON** |
| 12A | Carte Electronique | OUI | OUI |
| 12B | Capteurs (Niveau, Thermique, Débit, Analyseur Gaz/Combustion) | OUI | OUI |

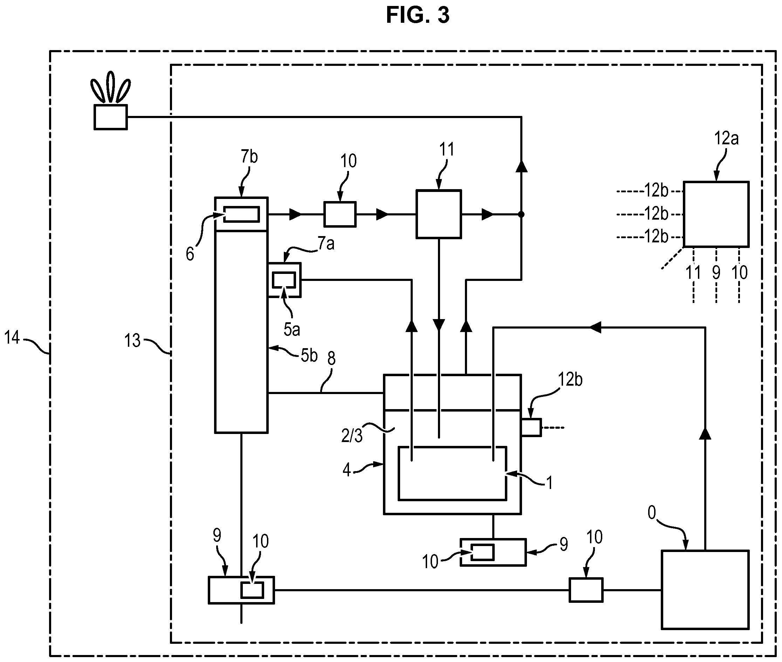

Ces différents composants sont également repris sur la figure 3.

On a en outre représenté sur cette figure le périmètre 13 d'un dispositif de production d'hydrogène ou d'oxygène qui comporte d'une part une cellule d'électrolyse de l'eau (cellule 0 représentées également sur les figures 1 et 2) et d'autre part un système de traitement de gaz du type de celui décrit en référence aux figures 1 et 2.

Sur cette même figure, on a également représenté une combustion qui est alimentée par un tel dispositif de production d'H2 et/ou O2. Cette combustion et le dispositif de production 13 qui l'alimente constituent ensemble un appareil de combustion 14.

La combustion est par exemple réalisée dans un bruleur de gaz ou encore une chambre de combustion.

Dans une autre application particulièrement avantageuse, il est constitué par un ensemble chalumeau/buse et l'appareil 14 est un appareil de brasage/soudage à combustion comprenant de l'hydrogène et/ou de l'oxygène.

## Revendications

1. Système de traitement de gaz d'hydrogène et/ou d'oxygène produits par électrolyse de l'eau (0) et servant à alimenter une combustion, **caractérisé en ce qu'**il comprend au moins un échangeur thermique (1), dans lequel le (ou les) gaz peut (peuvent) circuler pour être refroidi(s) ou réchauffé(s), ledit échangeur thermique étant immergé dans un composé réactif (2 ou 3) qui est contenu dans une enceinte (4a) et qui est lui-même traversé par le (ou les) gaz, ledit composé réactif ainsi que le (ou les) gaz subissant une modification physico-chimique qui génère une réaction endothermique ou exothermique lorsqu'ils sont mis en contact.

2. Système selon la revendication 1, **caractérisé en ce qu'**un composé réactif est un composé liquide (2) dans lequel le (ou les) gaz peut (peuvent) circuler par barbotage.

3. Système selon la revendication 1, **caractérisé en ce qu'**un composé réactif est un composé solide (3) avec lequel le (ou les) gaz peut (peuvent) être mis en contact.

4. Système selon l'une des revendications précédentes, **caractérisé en ce qu'**il comporte plusieurs enceintes (4) de traitement et/ou de filtration, chacune de ces enceintes comportant un composé réactif (4a) ou un composé de lavage (4b) à travers lequel le (ou les) gaz peuvent circuler,

5. Système selon l'une des revendications précédentes, **caractérisé en ce qu'**il comporte au moins un coalesceur (5a) en entrée d'au moins une colonne (5b) de séparation et/ou de traitement permettant l'asséchement du (ou des) gaz et la formation/récupération de condensats et sous-produits.

6. Système selon la revendication 5, **caractérisé en ce que** la colonne (5b) de séparation et/ou de traitement comporte un média (6) filtrant et/ou neutralisant pouvant avantageusement modifier la composition physico-chimique du (ou des) gaz.

7. Système selon la revendication 5 ou la revendication 6, **caractérisé en ce que** le coalesceur (5a) et/ou le média (6) filtrant et/ou neutralisant sont disposés dans des logements (7a et/ou 7b) accessibles sans démontage de tuyaux de circulation de gaz ni de raccord ni d'enceinte situé sur le trajet du (ou des) gaz, afin de permettre la maintenance desdits coalesceur et/ou média sans ouverture du circuit.

8. Système selon la revendication 4 ou la revendication 5, **caractérisé en ce qu'**il comporte entre deux enceintes (4) ou entre une enceinte une colonne (5b) de séparation et/ou de traitement au moins un élément de raccordement formant pont thermique (8).

9. Système selon l'une des revendications précédentes, **caractérisé en ce qu'**il comporte au moins un système (9) de vidange et/ou de recyclage des condensats et autres sous-produits générés dans la colonne de séparation (5b), et/ou du composé réactif contenu dans l'enceinte (4).

10. Système selon l'une des revendications précédentes, **caractérisé en ce qu'**il comprend au moins un clapet anti-retour (10a) et/ou une vanne (10b) de compartimentage du circuit fluidique.

11. Système selon l'une des revendications précédentes, **caractérisé en ce qu'**il comprend au moins un système (11) de répartition du débit des gaz permettant le contrôle du taux de filtration, de modification physico-chimique et/ou le pilotage de la température des gaz et/ou de la combustion.

12. Système selon l'une des revendications précédentes, **caractérisé en ce qu'**il comprend au moins une carte électronique (12a) connectée à au moins un instrument (12b) de mesure niveau et/ou de mesure thermique et/ou de débit de gaz et/ou d'analyse de gaz et/ou de combustion, permettant de piloter le dispositif.

13. Dispositif (13) de production d'hydrogène et/ou d'oxygène par électrolyse de l'eau, **caractérisé en ce qu'**il comporte un système de traitement selon l'une quelconque des revendications précédentes.

14. Appareil (14) servant à alimenter une combustion comprenant de l'hydrogène et/ou de l'oxygène, **caractérisé en ce qu'**il comporte un dispositif de production d'hydrogène et/ou d'oxygène par électrolyse de l'eau selon la revendication 13.

15. Appareil de brasage/soudage à combustion comprenant de l'hydrogène et/ou de l'oxygène, **caractérisé en ce qu'**il comporte un chalumeau et une buse formant ensemble un brûleur, ainsi qu'un dispositif de production d'hydrogène et/ou d'oxygène par électrolyse de l'eau selon la revendication 13, ledit dispositif de production alimentant ledit bruleur en gaz.

## Patentansprüche

1. System zur Aufbereitung von Wasserstoff- und/oder Sauerstoffgasen, die durch eine Wasserelektrolyse (0) produziert werden und zum Speisen einer Verbrennung dienen, **dadurch gekennzeichnet, dass** es mindestens einen Wärmetauscher (1) umfasst, in dem das oder die Gase zirkulieren können, um sie abzukühlen oder zu erhitzen, wobei der Wärmetauscher in eine reaktive Verbindung (2 oder 3) eingetaucht ist, die in einem Behälter (4a) enthalten ist und die selbst von dem oder den Gasen durchströmt wird, wobei die reaktive Verbindung sowie das oder die Gase einer physikalisch-chemischen Modifikation unterzogen werden, die eine endotherme oder exotherme Reaktion erzeugt, wenn sie in Kontakt gebracht werden.

2. System nach Anspruch 1, **dadurch gekennzeichnet, dass** eine reaktive Verbindung eine flüssige Verbindung (2) ist, in der das oder die Gase durch Einblasen zirkulieren können.

3. System nach Anspruch 1, **dadurch gekennzeichnet, dass** eine reaktive Verbindung eine feste Verbindung (3) ist, in der das oder die Gase in Kontakt gebracht werden.

4. System nach einem der vorhergehenden Ansprüche, **dadurch gekennzeichnet, dass** es mehrere Aufbereitungs- und/oder Filtrationsbehälter (4) umfasst, wobei jeder dieser Behälter eine reaktive Verbindung (4a) oder eine Waschverbindung (4b) umfasst, durch die das oder die Gase zirkulieren können.

5. System nach einem der vorhergehenden Ansprüche, **dadurch gekennzeichnet, dass** es mindestens eine Koaleszenzvorrichtung (5a) am Einlass von mindestens einer Trenn- und/oder Aufbereitungskolonne (5b) umfasst, was die Trocknung des oder der Gase und die Bildung/Rückgewinnung von Kondensaten und Nebenprodukten ermöglicht.

6. System nach Anspruch 5, **dadurch gekennzeichnet, dass** die Trenn- und/oder Aufbereitungskolonne (5b) ein Filtrations- und/oder Neutralisationsmedium (6) umfasst, das vorteilhafterweise die physikalisch-chemische Zusammensetzung des oder der Gase modifizieren kann.

7. System nach Anspruch 5 oder 6, **dadurch gekennzeichnet, dass** die Koaleszenzvorrichtung (5a) und/oder das Filtrations- und/oder Neutralisationsmedium (6) in Gehäusen (7a und/oder 7b) angeordnet sind, die ohne Demontage von weder Gaszirkulationsrohren noch Anschlüssen noch Behälter, die sich in der Bahn des oder der Gase befinden, zugänglich sind, um die Wartung der Koaleszenzvorrichtung und/oder des Mediums ohne Öffnen des Kreislaufs zu ermöglichen.

8. System nach Anspruch 4 oder 5, **dadurch gekennzeichnet, dass** es zwischen zwei Behältern (4) oder zwischen einem Behälter und einer Trenn- und/oder Aufbereitungskolonne (5b) mindestens ein Verbindungselement umfasst, das eine Wärmebrücke (8) bildet.

9. System nach einem der vorhergehenden Ansprüche, **dadurch gekennzeichnet, dass** es mindestens ein System (9) zum Ablassen und/oder Rückführen von Kondensaten und anderen Nebenprodukten, die in der Trennkolonne (5b) erzeugt werden, und/oder der reaktiven Verbindung, die in dem Behälter (4) enthalten ist, umfasst.

10. System nach einem der vorhergehenden Ansprüche, **dadurch gekennzeichnet, dass** es mindestens ein Rückschlagventil (10a) und/oder ein Ventil (10b) zur Aufteilung des Fluidkreislaufs umfasst.

11. System nach einem der vorhergehenden Ansprüche, **dadurch gekennzeichnet, dass** es mindestens ein System (11) zur Verteilung des Gasdurchflusses umfasst, was die Regelung der Filtrationsrate, der physikalisch-chemischen Modifikation und/oder der Steuerung der Gas- und/oder der Verbrennungstemperatur ermöglicht.

12. System nach einem der vorhergehenden Ansprüche, **dadurch gekennzeichnet, dass** es mindestens eine Elektronikkarte (12a) umfasst, die mit mindestens einem Instrument (12b) zur Füllstandsmessung und/oder Wärmemessung und/oder Messung des Gasdurchflusses und/oder zur Gas- und/oder Verbrennungsanalyse verbunden ist, was das Steuern der Vorrichtung ermöglicht.

13. Vorrichtung (13) zur Produktion von Wasserstoff und/oder Sauerstoff durch Wasserelektrolyse, **dadurch gekennzeichnet, dass** sie ein Aufbereitungssystem nach einem der vorhergehenden Ansprüche umfasst.

14. Anlage (14), die zum Speisen einer Verbrennung dient, umfassend Wasserstoff und/oder Sauerstoff, **dadurch gekennzeichnet, dass** sie eine Vorrichtung zur Produktion von Wasserstoff und/oder Sauerstoff durch Wasserelektrolyse nach Anspruch 13 umfasst.

15. Anlage zum Brennlöten/-schweißen, umfassend Wasserstoff und/oder Sauerstoff, **dadurch gekennzeichnet, dass** sie einen Schneidbrenner und eine Düse, die zusammen einen Brenner bilden, sowie eine Vorrichtung zur Produktion von Wasserstoff und/oder Sauerstoff durch Wasserelektrolyse nach Anspruch 13 umfasst, wobei die Produktionsvorrichtung den Brenner mit Gas speist.

## Claims

1. System for treating hydrogen and/or oxygen gases produced by water electrolysis (0) and serving to feed a combustion, **characterized in that** it comprises at least one heat exchanger (1), in which the gas(es) can circulate to be cooled or heated, said heat exchanger being immersed in a reactive compound (2 or 3) which is contained in an enclosure (4a) and which is itself traversed by the gas(es), said reactive compound and the gas(es) undergoing a physicochemical modification that generates an endothermic or exothermic reaction when they are brought into contact.

2. System according to claim 1, **characterized in that** a reactive compound is a liquid compound (2) in which the gas(es) circulate(s) by bubbling.

3. System according to claim 1, **characterized in that** a reactive compound is a solid compound (3) with which the gas(es) is (are) brought into contact.

4. System according to one of the preceding claims, **characterized in that** it comprises several treatment and/or filtration enclosures (4), each of these enclosures including a reactive compound (4a) or a washing compound (4b) through which the gas(es) circulate(s).

5. System according to one of the preceding claims, **characterized in that** it comprises at least one coalescer (5a) at the inlet of at least one separation and/or treatment column (5b) allowing the drying of the gas(es) and the formation/recovery of condensates and by-products.

6. System according to claim 5, **characterized in that** the separation and/or treatment column (5b) comprises a filtering and/or neutralizing media (6) which can advantageously modify the physicochemical composition of the gas(es).

7. System according to claim 5 or claim 6, **characterized in that** the coalescer (5a) and/or the filtering and/or neutralizing media (6) are disposed in housings (7a and/or 7b) accessible without dismantling gas circulation pipes or fittings or enclosures located in the path of the gas(es), in order to allow the maintenance of said coalescer and/or media without opening the circuit.

8. System according to claim 4 or claim 5, **characterized in that** it comprises between two enclosures (4) or between one enclosure a separation and/or treatment column (5b) at least one connecting element forming a thermal bridge (8).

9. System according to one of the preceding claims, **characterized in that** it comprises at least one system (9) for discharging and/or recycling the condensates and other by-products generated in the separation column (5b), and/or the reactive compound contained in the enclosure (4).

10. System according to one of the preceding claims, **characterized in that** it comprises at least one check valve (10a) and/or a valve (10b) for partitioning the fluid circuit.

11. System according to one of the preceding claims, **characterized in that** it comprises at least one gas flow distribution system (11) allowing the control of the filtration rate, physicochemical modification and/or the control of the gas temperature and/or combustion.

12. System according to one of the preceding claims, **characterized in that** it comprises at least one electronic card (12a) connected to at least one instrument (12b) for level and/or thermal measurement and/or gas flow and/or gas and/or combustion analysis, allowing the device to be controlled.

13. Device (13) for producing hydrogen and/or oxygen by water electrolysis, **characterized in that** it comprises a treatment system according to any one of the preceding claims.

14. Device (14) serving to supply a combustion comprising hydrogen and/or oxygen, **characterized in that** it includes a device for producing hydrogen and/or oxygen by water electrolysis according to claim 13.

15. Combustion brazing/soldering device comprising hydrogen and/or oxygen, **characterized in that** it comprises a torch and a nozzle together forming a burner, as well as a device for producing hydrogen and/or oxygen by water electrolysis according to claim 13, said production device supplying said burner with gas.
